# EUROPEAN PATENT SPECIFICATION

(11) **EP 1 826 981 B1**
(45) Date of publication and mention of the grant of the patent: **06.07.2016**
(21) Application number: 06290318.2
(22) Date of filing: 22.02.2006
(51) Int. Cl.: H04L 29/06, H04N 7/173

(54) **INTERACTIVE MULTIMEDIA BROADCASTING SYSTEM WITH DEDICATED ADVERTISEMENT CHANNEL**
INTERAKTIVES MULTIMEDIA-FERNSEHRUNDFUNKSYSTEM MIT EINEM ZUGEORDNETEN WERBUNGSKANAL
SYSTÈME DE DIFFUSION MULTIMÉDIAS INTERACTIF AVEC UN CANAL SPECIALISÉ DE PUBLICITÉ.

(43) Date of publication of application: 29.08.2007
(73) Proprietor: ALCATEL LUCENT, 92100 Boulogne-Billancourt (FR)
(72) Inventor: Coppens, Toon, 2500 Lint (BE); Broos, Rudi Costantinus Josephina, 2910 Essen (BE)
(74) Representative: ALU Antw Patent Attorneys

(56) References cited:
- WO-A-00/67474
- US-A1- 2005 120 391

## Description

The present invention relates to an interactive multimedia broadcasting system with
- an end-user terminal adapted to receive channels of multimedia data,
- a content server adapted to transmit a predetermined number of said channels to said terminal,
- an interactivity database adapted to receive, from said content server, notices of available interactivity on the channel transmitted to said terminal, and
- an interactivity server controlled by said interactivity database and adapted to transmit interactive items to said terminal and to receive feedback from said terminal, said feedback relating to the acceptance, by the user of said terminal, of interactive data proposed by said interactive items.

Such an interactive multimedia broadcasting system is generally known in the art as it is for instance an enhanced television system, preferably an Internet Protocol TeleVision IPTV infrastructure.

The enhanced television system allows getting more information about specific items on a TV set.

IP Television IPTV is a term used to describe a number of service offerings for the delivery of packetized video services over a broadband network. These video services can range from a multichannel video service (switched digital video) that mimics traditional broadcast TV, to true video on demand, and fully interactive and/or enhanced video services. Typical service enhancements include robust program information, selection and navigation, as well as multiple camera angles, integrated digital video recording functionality, and the integration of data and telephony services into the video experience.

An existing platform for the delivery of TV and video assets through broadband IP network is the Integrated IPTV Solution from Alcatel and Microsoft, advertised at the following Internet URL: http://download.microsoft.com/download/1/0/3/103bae29-c839-4bd9-89e0-8969514b3713/Microsoft_Alcatel%20brochure.pdf

This platform includes the management software to stream television content through a number of broadcast channels to end-users, as well as to stream on-demand video content from a video-on-demand store to the end-users through on-demand channels. The TV or video content that can be viewed is advertised via an Electronic Program Guide EPG that further enables end-users to select video assets they desires to view and to program electronic recording of video assets. It is however not possible for the end-users of Alcatel and Microsoft's Integrated IPTV Solution to publish or control content that is delivered through the broadcast channels or on-demand channels.

During a TV broadcast, the user can interact with, e.g., a commercial to receive more information, and as such leave the linear broadcasting to receive more unicast info. This interaction may for instance be initiated by "pushing" on a red button, as known from SKY™ channel in the UK. As an example, by pushing the red button on remote control during a car commercial video sequence, the user can see what models of cars there exist, etc, This gives more info that the 30 seconds commercial generally allowed for TV commercials.

However, after having finished looking to this unicast info, the user returns to the "normal" broadcast content on the channel whereon the user was looking at and no more information is or will be present relating to the interactivity on your TV set. Moreover, the user has then generally lost a part of the broadcast content the user was looking on.

Document US2005/120391-A1 discloses a system for generation of interactive content related to TV programming and advertisements. The system allows two-way, fully interactive applications to be delivered to the viewer. Viewers may be offered an interactive application from an advertiser which when selected, activates a real time, two-way communications channel between the viewer (or multiple viewers) and the advertiser either directly, or via the transaction management server for purposes of customer response and/or fulfillment. The two-way communication channel may be via conventional point and click, telephone conversation, videoconference, ...

Patent application WO 00/67474 relates to advertisement presentation and tracking in a TV set. It discloses advertisements being shown in a channel banner while the consumer is viewing program information in the Electronic Program Guide (EPG). In an alternative solution an advertisement channel is inserted onto a list of active TV channel, such that the viewer comes across the advertisement channel when going through the list of available channels.

It is an objective of the current invention to disclose an interactive multimedia broadcasting system that does not have the above-described limitations, i.e. which enables the end-user to watch both the broadcast content and, e.g., the additional video sequence.

According to the invention, this object is achieved due to the fact that said content server is adapted, upon acceptance by the user of said user terminal, to transmit said interactive data to said terminal on an extra channel.

In this way, the interactive multimedia broadcasting system provides to the user, watching television, the possibility to subscribe to an extra (live or on-demand) channel, triggered by an interactive message linked to the multimedia content of the channel the user was looking to. As such, after the TV content the user was looking to will end, the user will still be able to look to content related to the subject on which the user accepted the interactivity.

In other words, the interactive multimedia broadcasting system provides means to have persistent links to enhanced information. This is not possible with the known Dedicated Advertisement Location DAL.Another characterizing embodiment of the present invention is that said content server is adapted to add said extra channel to the predetermined number of channels transmitted to said terminal.

In this way, the end-user can zap between the predetermined channels and the extra channel, e.g. by selection on a known Electronic Program Guide EPG.

In a preferred characterizing embodiment of the present invention, a channel is an aggregation of multimedia items, e.g. of video.

Moreover, any channel transmitted to the terminal, even the extra channel, is a broadcast channel, a unicast channel or a multicast channel.

Further characterizing embodiments of the present interactive multimedia broadcasting system are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Figs. 1 to 3 show different steps of operations performed in the interactive multimedia broadcasting system of the invention; and
Fig. 4 shows the chronological order of operations of the previous Figs 1 to 3.

The interactive multimedia broadcasting system of subject is an enhanced television system such as an Internet Protocol TeleVision IPTV infrastructure. This system provides to an end-user of a terminal TV, watching television, means to subscribe for extra (live or on-demand) unicast, multicast or broadcast channels, triggered by an interactive message linked to the multimedia content the user was looking at. As such, after the television content the user was looking to will end, the user will still be able to look to content related to the subject on which the user accepted the interactivity.

When the end-user positively reacts on the interactivity (channel subscription invitation) provided during a specific multimedia item, a community content manager CCM, which keeps track of which end-user is subscribed to which channels, will add an extra channel promoted in the interactivity to the channel list of this end-user. The information regarding this extra channel is then provided to the terminal TV of the end-user so that the user can zap to and find this channel in his Electronic Program Guide EPG (when available).

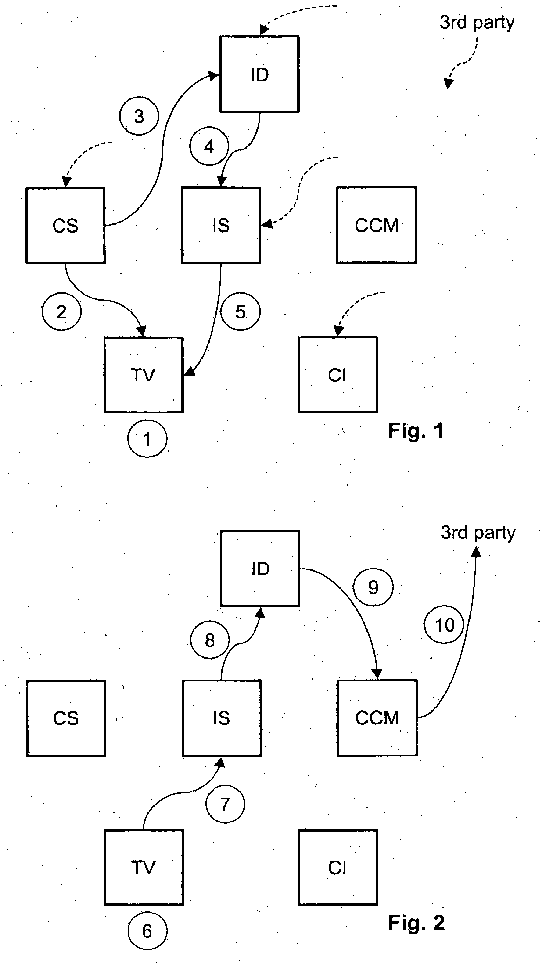

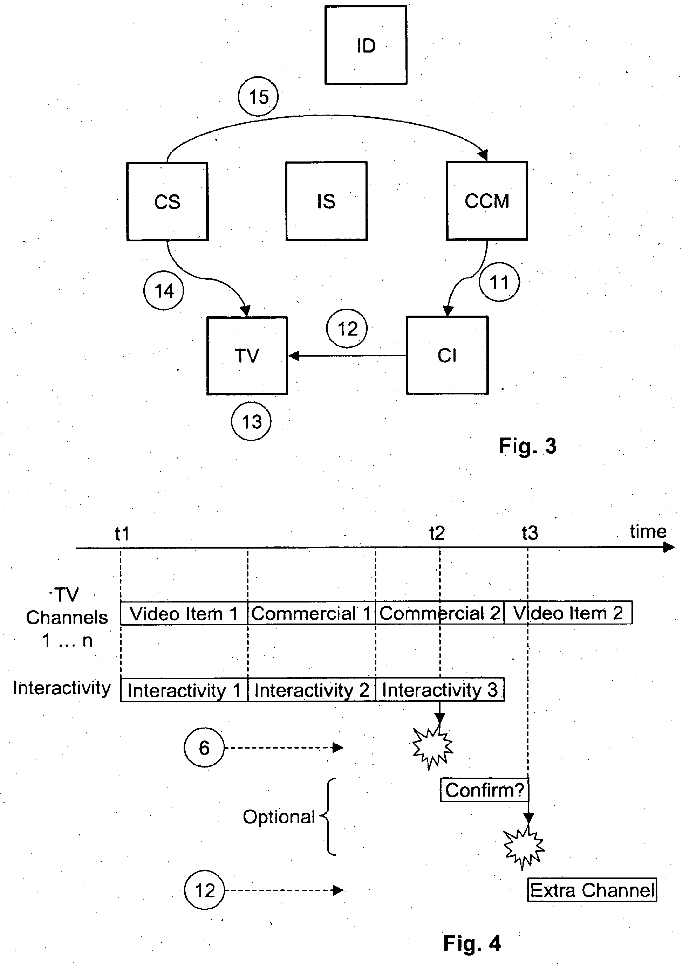

The working of the interactive multimedia broadcasting system will be explained in more detail below by making reference to the digits indicated on the Figs. 1 to 3, as well as to Fig. 4 showing the chronological order of the operations.

Fig. 1 represents the interactivity, i.e. the option to subscribe to a channel.
1) At a time t1 (see at Fig. 4), an end-user, linked to a multimedia item, is looking to a terminal TV, e.g. to channel E on his television set with optionally a Set-Top-Box STB (not shown);
2) Channel E is provided from a content server CS as a unicast, multicast or broadcast data. The content server CS provides n channels 1 ... n such as Video Item 1, followed by Commercial 1, Commercial 1, Video Item 2, ... To most of the TV channels, if not to all, corresponds an Interactivity such as Interactivity 1, Interactivity 2, Interactivity 3, ... ;
3) The content server CS notices that a new multimedia item will be played, e.g. Commercial 2, on which Interactivity is available, and notices the interactivity database ID;
4) The interactivity database ID checks which interactivity item, e.g. a channel invitation pop-up Interactivity 3, is linked to the current video item Commercial 2 and urges the interactivity server IS to provide this interactivity item Interactivity 3 to the end-user's TV. Optionally, the interactivity database ID checks with a community content manager CCM whether the end-user has already subscribed to the channel for which the invitation will be send to his terminal TV.
   In this context, the definition of a channel is broader than just a broadcast channel. A channel is rather an aggregation of multimedia items. There are also on-demand unicast or multicast channels as an aggregation of different content items.
   Furthermore, a content server CS contains the complete multimedia vault of available broadcast channels, VoD items and other multicast and unicast items, while also providing the playout server.
   The interactivity database ID is a list on which content items and interactivity items are linked: which interactivity to launch with which item. And keeps track of which channel is linked to which video item. Fields of the interactivity database ID are Video Item, Interactivity and Channel. A Video item field could be a commercial about a car, e.g. 'BestCar', on a broadcast TV channel, an Interactivity field could be a pop-up in overlay with as text: "do you want to subscribe to this 'BestCar' channel", and a Channel could be 'BestCar' unicast & on-demand channel as an aggregation of clips related to new 'BestCar' models.
   The interactivity server IS contains the interactive items that can be shown, e.g. notifications in overlay, and contains the logic related to what to do when the end-user interacts. The interactivity server IS provides the interactive items, triggered by the interactivity database ID.
   The community content manager and conditional access system CCM keeps track of which content is linked to which channel, and which end-user are subscribed to which channel and can thus get access to the channel.
5) Summarizing, the interactivity item Interactivity 3 is now provided to the end-user's TV and is combined, e.g. in overlay, with the video item Commercial 2 played out by the server.

Fig.2 represents the end-user interaction and channel subscription.
6) At a time t2, the end-user is interested in the proposed channel and accepts the subscription, e.g. by pushing 'OK' on his remote control;
7) This feedback is send to the interactivity server IS. Optionally, as shown at Fig. 4, a confirmation of the acceptance by the end-user may be requested;
8) The interactivity server IS urges the interactivity database ID to look to which channel this interactivity item was linked to;
9) The interactivity database ID then urges the community content manager CCM to add an extra channel, e.g. channel Y, to the end-user's channel list;
10) The community content manager CCM provides feedback to a 3^{rd} party, responsible for this particular channel Y, that the end-user is now also subscribing to his channel.

Fig. 3 shows how the new channel Y becomes available to end-user.
11) The community content manager CCM urges a channel information CI to provide the channel Y to the terminal TV;
12) At a time t3, channel Y is provided to the terminal TV by the channel information CI as an extra channel to be added to the n channels previously subscribed;
13) The end-user sees now in his Electronic Program Guide EPG (if available) that there is an extra channel Y to which the user has access;
14) The end-user now can zap between channels 1 ... n and channel Y or select channel Y directly from the Electronic Program Guide EPG of which the signaling is send to the content server CS.
15) The content server CS can optionally check with the community content manager CCM if the end-user is allowed to access the content of this extra channel.

As a result, the content of the extra channel Y is send from the content server CS to the terminal TV like in number 1 above, and the complete scenario can be repeated for other new channels.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. An interactive multimedia broadcasting system with
- an end-user terminal (TV) adapted to receive channels of multimedia data,
- a content server (CS) adapted to transmit a predetermined number of said channels (TV Channels 1 ... n) to said terminal,
- an interactivity database (ID) adapted to receive, from said content server, notices of available interactivity on the channel transmitted to said terminal, and
- an interactivity server (IS) adapted to be controlled by said interactivity database (ID) and adapted to transmit interactive items (Interactivity 1, Interactivity 2, Interactivity 3) to said terminal (TV) and to receive feedback from said terminal, said feedback relating to the acceptance, by the user of said terminal, of interactive data proposed by said interactive items,
whereby said content server (CS) is adapted, upon acceptance by the user of said end-user terminal (TV), to transmit said interactive data to said terminal (TV) on an extra channel,
***characterized in that*** said system further comprises a community content manager (CCM) adapted for keeping track of the content linked to said extra channel and for keeping track of subscriptions to said extra channel.

2. The system according to claim 1,
***characterized in that*** said community content manager (CCM) is further adapted to keep track of a channel list indicative of which channels are transmitted to said end-user terminal (TV),
***and in that*** said interactivity database (ID) is adapted to control said community content manager to add said extra channel to the channel list.

3. The system according to claim 1 or 2, **characterized in that** said community content manager (CCM) is further adapted to provide feedback about said extra channel.

4. The system according to any of the previous claims, ***characterized in that*** said content server (CS) is adapted to add said extra channel to the predetermined number of channels transmitted to said terminal (TV).

5. The system according to any of the previous claims, ***characterized in that*** said interactivity server (IS) is adapted to transmit an interactive item (Interactivity 1, Interactivity 2, Interactivity 3) corresponding to the content item then transmitted to said terminal (TV) by said a content server (CS).

6. The system according to any of the previous claims, ***characterized in that*** a channel is an aggregation of multimedia items.

7. The system according to any of the previous claims, ***characterized in that*** said extra channel transmitted to said terminal (TV) is a broadcast channel, a unicast channel or a multicast channel.

8. The system according to any of the precious claims, ***characterized in that*** any channel transmitted to said terminal (TV) is a broadcast channel, a unicast channel or a multicast channel.

9. The system according to any of the previous claims, ***characterized in that*** any channel transmitted to the terminal is adapted to carry On-Demand multimedia item.

10. The system according to any of the previous claims, ***characterized in that*** the multimedia item is video.

11. The interactive multimedia broadcasting system according to any of the preceding claims, ***characterized in that*** said system is an Internet Protocol TeleVision (IPTV) infrastructure.

## Patentansprüche

1. Interaktives Multimedia-Fernsehrundfunksystem mit
- einem Benutzerendgerät (TV), das angepasst ist, um Multimediadatenkanäle zu empfangen,
- einem Inhaltsserver (CS), der angepasst ist, um eine vorausbestimmte Anzahl der besagten Kanäle (TV Kanäle 1 ... n) an besagtes Endgerät zu senden,
- einer Interaktivitätsdatenbank (ID), die angepasst ist, um von dem besagten Inhaltsserver Mitteilungen einer verfügbaren Interaktivität auf dem Kanal zu empfangen, der an besagtes Endgerät gesendet wird, und
- einem Interaktivitätsserver (IS), der angepasst ist, um von der besagten Interaktivitätsdatenbank (ID) gesteuert zu werden, und angepasst, um interaktive Objekte (Interaktivität 1, Interaktivität 2, Interaktivität 3) an besagtes Endgerät (TV) zu senden und eine Rückmeldung von dem besagten Endgerät zu empfangen, wobei sich besagte Rückmeldung auf die Annahme von interaktiven Daten, die von besagten interaktiven Objekten vorgeschlagen werden, durch den Benutzer des besagten Endgeräts bezieht,
wobei besagter Inhaltsserver (CS) angepasst ist, um nach Annahme durch den Benutzer des besagten Benutzerendgeräts (TV) besagte interaktive Daten an besagtes Endgerät (TV) auf einem Extrakanal zu senden,
***dadurch gekennzeichnet, dass*** besagtes System weiterhin einen Gemeinschaftsinhaltsverwalter (CCM) umfasst, der zum Nachverfolgen des Inhalts, der mit besagtem Extrakanal verbunden ist, und zum Nachverfolgen von Anmeldungen zu besagtem Extrakanal angepasst ist.

2. System nach Anspruch 1,
***dadurch gekennzeichnet, dass*** besagter Gemeinschaftsinhaltsverwalter (CCM) weiterhin angepasst ist, um eine Kanalliste nachzuverfolgen, die dafür bezeichnend ist, welche Kanäle an besagtes Benutzerendgerät (TV) gesendet werden,
*und dadurch, dass* besagte Interaktivitätsdatenbank (ID) angepasst ist, um besagten Gemeinschaftsinhaltsverwalter zu steuern, um besagten Extrakanal zur Kanalliste hinzuzufügen.

3. System nach Anspruch 1 oder 2, **dadurch gekennzeichnet, dass** besagter Gemeinschaftsinhaltsverwalter (CCM) weiterhin angepasst ist, um eine Rückmeldung über besagten Extrakanal zu liefern.

4. System nach einem beliebigen der vorstehenden Ansprüche,
***dadurch gekennzeichnet, dass*** besagter Inhaltsserver (CS) angepasst ist, um besagten Extrakanal zur vorausbestimmten Anzahl von Kanälen hinzuzufügen, die an besagtes Endgerät (TV) gesendet werden.

5. System nach einem beliebigen der vorstehenden Ansprüche,
***dadurch gekennzeichnet, dass*** besagter Interaktivitätsserver (IS) angepasst ist, um ein interaktives Objekt (Interaktivität 1, Interaktivität 2, Interaktivität 3) zu senden, das dem Inhaltsobjekt entspricht, das dann an besagtes Endgerät (TV) von besagtem Inhaltsserver (CS) gesendet wird.

6. System nach einem beliebigen der vorstehenden Ansprüche,
***dadurch gekennzeichnet, dass*** ein Kanal eine Bündelung von Multimediaobjekten ist.

7. System nach einem beliebigen der vorstehenden Ansprüche,
***dadurch gekennzeichnet, dass*** besagter Extrakanal, der an besagtes Endgerät (TV) gesendet wird, ein Broadcast-Kanal, ein Unicast-Kanal oder ein Multicast-Kanal ist.

8. System nach einem beliebigen der vorstehenden Ansprüche,
***dadurch gekennzeichnet, dass*** jeder beliebige Kanal, der an besagtes Endgerät (TV) gesendet wird, ein Broadcast-Kanal, ein Unicast-Kanal oder ein Multicast-Kanal ist.

9. System nach einem beliebigen der vorstehenden Ansprüche,
***dadurch gekennzeichnet, dass*** jeder beliebige Kanal, der an das Endgerät gesendet wird, angepasst ist, um ein On-Demand-Multimediaobjekt zu tragen.

10. System nach einem beliebigen der vorstehenden Ansprüche,
***dadurch gekennzeichnet, dass*** das Multimediaobjekt ein Video ist.

11. Interaktives Multimedia-Fernsehrundfunksystem nach einem beliebigen der vorstehenden Ansprüche, ***dadurch gekennzeichnet, dass*** besagtes System eine Internet Protocol TeleVision (IPTV)-Infrastruktur ist.

## Revendications

1. Système de diffusion multimédia interactif avec
- un terminal d'utilisateur final (TV) adapté pour recevoir des canaux de données multimédia,
- un serveur de contenu (CS) adapté pour transmettre un nombre prédéterminé desdits canaux (canaux de télévision 1 ... n) audit terminal,
- une base de données d'interactivité (ID) adaptée pour recevoir, à partir dudit serveur de contenu, des indications d'interactivité disponible sur le canal transmis audit terminal, et
- un serveur d'interactivité (IS) adapté pour être commandé par ladite base de données d'interactivité (ID) et adapté pour transmettre des éléments interactifs (Interactivité 1, Interactivité 2, Interactivité 3) audit terminal (TV) et pour recevoir un retour d'informations à partir dudit terminal, ledit retour d'informations étant relatif à l'acceptation, par l'utilisateur dudit terminal, de données interactives proposées par lesdits éléments interactifs,
ledit serveur de contenu (CS) étant adapté, lorsque l'utilisateur accepte ledit terminal d'utilisateur final (TV), pour transmettre lesdites données interactives audit terminal (TV) sur un canal supplémentaire,
***caractérisé en ce que*** ledit système comprend en outre un gestionnaire de contenu communautaire (CCM) adapté pour conserver une trace du contenu lié audit canal supplémentaire et pour conserver une trace des abonnements audit canal supplémentaire.

2. Système selon la revendication 1,
***caractérisé en ce que*** ledit gestionnaire de contenu communautaire (CCM) est en outre adapté pour conserver une trace d'une liste de canaux indiquant quels canaux sont transmis audit terminal d'utilisateur final (TV),
*et **en ce que*** ladite base de données d'interactivité (ID) est adaptée pour commander audit gestionnaire de contenu communautaire d'ajouter ledit canal supplémentaire à la liste de canaux.

3. Système selon la revendication 1 ou 2, ***caractérisé en ce que*** ledit gestionnaire de contenu communautaire (CCM) est en outre adapté pour fournir un retour d'informations à propos dudit canal supplémentaire.

4. Système selon l'une quelconque des revendications précédentes, ***caractérisé en ce que*** ledit serveur de contenu (CS) est adapté pour ajouter ledit canal supplémentaire au nombre prédéterminé de canaux transmis audit terminal (TV).

5. Système selon l'une quelconque des revendications précédentes, ***caractérisé en ce que*** ledit serveur d'interactivité (IS) est adapté pour transmettre un élément interactif (Interactivité 1, Interactivité 2, Interactivité 3) correspondant à l'élément de contenu, que ledit serveur de contenu (CS) transmet ensuite audit terminal (TV).

6. Système selon l'une quelconque des revendications précédentes, ***caractérisé en ce qu'**un* canal est une agrégation d'éléments multimédia.

7. Système selon l'une quelconque des revendications précédentes, ***caractérisé en ce que*** ledit canal supplémentaire transmis audit terminal (TV) est un canal de diffusion, un canal de monodiffusion ou un canal de multidiffusion.

8. Système selon l'une quelconque des revendications précédentes, ***caractérisé en ce qu'**un* quelconque canal transmis audit terminal (TV) est un canal de diffusion, un canal de monodiffusion ou un canal de multidiffusion.

9. Système selon l'une quelconque des revendications précédentes, ***caractérisé en ce qu'**un* quelconque canal transmis au terminal est adapté pour transporter un élément multimédia à la demande.

10. Système selon l'une quelconque des revendications précédentes, ***caractérisé en ce que*** l'élément multimédia est une vidéo.

11. Système de diffusion multimédia interactif selon l'une quelconque des revendications précédentes, ***caractérisé en ce que*** ledit système est une infrastructure de télévision sur protocole Internet (IPTV).
